# EUROPÄISCHE PATENTSCHRIFT

(11) **EP 2 987 694 B1**
(45) Veröffentlichungstag und Bekanntmachung des Hinweises auf die Patenterteilung: **19.07.2017**
(21) Anmeldenummer: 15002366.1
(22) Anmeldetag: 08.08.2015
(51) Int. Cl.: B60T 8/18, B60T 13/68, B60G 17/017, B60W 10/18, B60W 10/22

(54) **VERFAHREN ZUR ANSTEUERUNG VON BREMSEN IN EINEM FAHRZEUG UND FAHRZEUG MIT EINEM STEUERGERÄT WORIN DAS VERFAHREN DURCHGEFÜHRT WIRD**
METHOD FOR CONTROLLING BRAKING IN A VEHICLE AND A VEHICLE HAVING A CONTROL UNIT IN WHICH THE METHOD IS EXECUTED
PROCEDE DE COMMANDE DE FREINS DANS UN VEHICULE AUTOMOBILE ET VEHICULE AUTOMOBILE AVEC UNE UNITE DE COMMANDE DANS LAQUELLE LE PROCEDE EST EXECUTE

(30) Priorität: 19.08.2014 DE 102014012549
(43) Veröffentlichungstag der Anmeldung: 24.02.2016
(73) Patentinhaber: WABCO GmbH, 30453 Hannover (DE)
(72) Erfinder: Schoppe, Michael, 30163 Hannover (DE); Stender, Axel, 31787 Hameln (DE); Walter, Felix Benjamin, 30171 Hannover (DE); Winkel, Marcel, 30159 Hannover (DE); Witte, Norbert, 31867 Lauenau (DE)
(74) Vertreter: Lauerwald, Jörg

(56) Entgegenhaltungen:
- EP-A1- 2 631 095
- EP-B1- 1 800 916
- WO-A1-03/059661
- DE-A1- 19 648 174

## Beschreibung

Die Erfindung betrifft ein Verfahren zur Ansteuerung von Bremsen durch ein elektronisches Bremssystem in einem gebremsten, stehenden Fahrzeug bei Niveauänderung. Weiterhin betrifft die Erfindung ein Fahrzeug mit elektronischem Bremssystem und ein Steuergerät hierfür.

Nutzfahrzeuge sind mit einer Federung versehen. Entsprechend ist die Höhe des Fahrzeugaufbaus über den Rädern bzw. Achsen nicht konstant. Beim Beladen nimmt die Höhe ab, beim Entladen nimmt die Höhe zu. Fahrzeuge mit Luftfederung können die Höhe aktiv anpassen, etwa durch manuelle Betätigung der Luftfederung oder durch eine automatische Niveauregelung.

In vielen Nutzfahrzeugen sind die Radachsen an längsgerichteten Achsschwingen oder Längslenkern gelagert. Bei jeder Höhenänderung einer Achse bewegt sich die betreffende Achsschwinge auf einem Bruchteil einer Kreisbahn. Dabei kann es zu einer Änderung des Abstands zwischen Hinterrädern und Vorderrädern kommen (Änderung des Radstands), je nach Position der Achsschwinge auf ihrer Kreisbahn. Zum Ausgleich müssen die Räder wenigstens einer Achse um einen kleinen Winkel drehen.

Das Beladen von Nutzfahrzeugen erfolgt typischerweise bei eingelegter Feststellbremse und inaktiver Betriebsbremse. Dies gilt auch für Anhängefahrzeuge bzw. Lastzüge. Durch die eingelegte Feststellbremse sind die Räder nicht mehr drehbar. Eine Änderung des Radstands kann nicht ausgeglichen werden. Es kommt zu einer unterschiedlich starken Verspannung im Fahrzeug, je nach Höhenänderung.

### Neue Beschreibungsseiten

Das Problem tritt auch in einem Lastzug auf, also in einer Kombination aus Sattelzugmaschine und Auflieger. Relevant ist der Radstand zwischen Hinterrädern der Zugmaschine einerseits und den Rädern des Aufliegers andererseits. Schließlich kann die beschriebene Verspannung an allen Fahrzeugen oder Lastzügen auftreten, bei denen die Niveauänderung zu einer Radstandsänderung führt, also z.B. auch in einer Kombination aus Motorwagen und Deichselanhänger.

Aus der EP 1 800 916 B1 ist ein Verfahren zum Ausgleich der beschriebenen Verspannung bekannt. Bei einer Änderung der Niveaueinstellung des Fahrzeugaufbaus gegenüber den Rädern werden während oder nach der Änderung der Niveaueinstellung die Bremsen an den Rädern selbsttätig, wechselseitig gelöst. Zuerst werden die Bremsen der Räder einer Seite gelöst und wieder festgestellt. Anschließend werden die Bremsen der Räder der anderen Seite gelöst und wieder festgestellt. Auf diese Weise soll die Verspannung schrittweise abgebaut werden. Der Vorteil des bekannten Verfahrens liegt darin, dass stets mindestens eine Seite des Fahrzeugs vollständig gebremst bleibt. Ein großer Nachteil ist der relativ hohe Luftverbrauch durch das vollständige Lösen und wieder Feststellen der Bremsen.

EP 2 631 095 A1 offenbart eine elektronische Niveauregelanlage für Fahrzeuge, wobei der Bremsdruck in den Rädern eines Anhängers abhängig von dem Status einer Parkbremse eines Zugfahrzeuges ist, welches pneumatisch mit dem Anhänger verbunden ist.

In Fahrzeugen mit elektronischer Luftfederung und/oder Niveauregelung sind im Bereich der Achsen Wegsensoren vorgesehen, aus deren Signalen das aktuelle Niveau/die Höhe des Fahrzeugaufbaus über der Achse bzw. eine Niveauänderung ablesbar ist. Die elektronische Luftfederung ist in modernen Nutzfahrzeugen regelungstechnisch mit dem elektronischen Bremssystem verbunden.

Aufgabe der vorliegenden Erfindung ist die Schaffung eines Verfahrens und eines Fahrzeugs, bei denen eine Entstehung oder ein Aufbau der bei Niveauänderung auftretenden Verspannung verhindert oder zumindest verringert wird, und zwar mit geringerem Luftverbrauch.

Das erfindungsgemäße Verfahren weist die Merkmale des Anspruchs 1 auf. Bei Erkennen einer Verspannung im Fahrzeug löst das elektronische Bremssystem beidseitig die Bremsen des Fahrzeugs, aber nur so weit, dass noch eine verminderte Abbremsung gegeben ist. Die verbleibende Abbremsung soll so groß sein, dass die aufgetretene Verspannung auf ein möglichst geringes Maß reduziert wird, aber das Fahrzeug nicht wegrollt. Die geringere Verspannung erlaubt eine Bewegung des Fahrzeugaufbaus über einen größeren Höhenbereich der Luftfederung, mit gleichzeitig verringertem Luftverbrauch.

Das elektronische Bremssystem erkennt auf Verspannung des Fahrzeugs, wenn zumindest folgende Bedingungen erfüllt sind:
a) das Fahrzeug steht still, und
b) das Fahrzeug ist gebremst, und
c) ein Grenzwert einer Niveauänderung ist über- oder unterschritten.

Bestandteile des elektronischen Bremssystems sind Raddrehzahlsensoren, aus deren Signalen ein Fahrzeugstillstand ermittelbar ist. Ob das Fahrzeug gebremst ist, kann sich aus dem Status der Feststellbremse und aus dem Bremssteuerdruck ergeben. Zumindest wenn die Feststellbremse eingelegt ist oder wenn der Bremssteuerdruck größer als ein Grenzwert ist, insbesondere größer ist als 4,5 bar, soll vorzugsweise eine Bremsung vorliegen. Die Niveauänderung ergibt sich aus den Signalen eines einer Achse zugeordneten Wegsensors. Die Niveauänderung soll vorzugsweise mindestens plus/minus 20 mm gegenüber einer Ausgangsposition betragen. Die Ausgangsposition wird nachfolgend auch als Neutralposition bezeichnet. Vorzugsweise werden die Bedingungen b) und c) erst abgefragt, wenn die voranstehenden Bedingungen a), b) erfüllt sind.

Als zusätzliche Bedingung für die Erkennung einer Verspannung noch berücksichtigt, ob die Geschwindigkeit der Niveauänderung unter einen definierten Grenzwert gesunken ist. Die auftretende Verspannung wirkt gegen die Niveauänderung und verhindert diese, sobald ein Gleichgewicht der Kräfte besteht. Die Geschwindigkeit der Niveauänderung ist dann gleich Null. Sobald die Geschwindigkeit einen Grenzwert unterschritten hat, beispielsweise 4 mm pro Sekunde, wird von einer Niveauänderung mit Verspannung ausgegangen. Vorzugsweise wird die Bedingung erst abgefragt, wenn die voranstehenden Bedingungen a), b), c) erfüllt sind. Vorteilhafterweise können die Bremsen derart gelöst werden, dass die verminderte Abbremsung eine der nachfolgenden Bedingungen erfüllt:
a) eine Abbremsung von mindestens 18 %,
b) eine Abbremsung von etwa 22 %,
c) eine Abbremsung von mindestens 12 %,
d) eine Abbremsung von etwa 16 %,
e) eine Abbremsung von mindestens 1 %,
f) eine Abbremsung von etwa 5 %.

Gesetzlich gefordert ist für ein beladenes Fahrzeug eine Abbremsung durch die eingelegte Feststellbremse von mindestens 18 %. Das Maß der Abbremsung bzw. die Höhe der Abbremsung sind definiert in der ECE-Norm R 13, siehe insbesondere Ziffer 2.1.3.1. Zwischen der Abbremsung und dem wirksamen Bremsdruck ist ein Zusammenhang über Kennlinien ermittelbar. Durch Regelung des Bremsdruckes kann die gewünschte Abbremsung angepasst werden. Auch bei einer Abbremsung von 22 % ist ein Abbau der entstandenen Verspannung soweit möglich, dass eine Höhenänderung des Fahrzeugaufbaus in den verschiedenen Beladungszuständen möglich wird.

In Lastzügen muss die Feststellbremse des Zugfahrzeugs allein wenigstens eine Abbremsung von 12% gewährleisten, siehe insbesondere Ziffer 2.1.3.2. der ECE R 13. Bevorzugt ist eine Abbremsung des Anhängefahrzeugs auf wenigstens 12%, vorzugsweise auf etwa 16%.

Aufgrund der mindestens geforderten Abbremsung eines Lastzuges durch das Zugfahrzeug von 12%, kann die Abbremsung des Anhängefahrzeugs auch weiter reduziert werden. Vorteilhaft ist eine Abbremsung des Anhängefahrzeugs auf mindestens 1% bzw. auf etwa 5%. Vorteilhafterweise werden die Bremsen derart gelöst, dass eine Abbremsung von höchstens 62 %, vorzugsweise von höchstens 40 % gegeben ist. Ziel ist eine Abbremsung, mit der die aufgebaute Verspannung weitgehend abgebaut werden kann. Zugleich soll die gesetzlich vorgeschriebene Abbremsung noch gewährleistet sein.

Nach einem weiteren vorteilhaften Gedanken der Erfindung werden die Bremsen durch das elektronische Bremssystem zumindest für eine definierte Zeitspanne gelöst und danach wieder angezogen. Die Zeitspanne liegt insbesondere zwischen 0,2 und 2 Sekunden. Vorteilhafterweise werden die Bremsen an allen Rädern des Fahrzeugs zugleich gelöst, insbesondere in gleichem Maße.

Nach einem weiteren vorteilhaften Gedanken der Erfindung kann vorgesehen sein, dass die Niveauänderung als Differenz aus einem aktuell detektierten Niveau und einer Neutralposition berechnet wird, wobei die Neutralposition bei gelöster Betriebsbremse oder Feststellbremse detektiert und gespeichert wird. Die Neutralposition kann zyklisch ermittelt und gespeichert werden. Ein zuvor gespeicherter Wert wird dabei überschrieben. Zusätzlich oder alternativ kann die Neutralposition auch nach jedem Lösen der Bremse gespeichert werden. Auch wird die Neutralposition insbesondere vor jeglicher Betätigung der Betriebsbremse gespeichert. Die jeweilige Neutralposition ergibt sich aus den Signalen des Wegsensors der betreffenden Achse.

Nach einem weiteren vorteilhaften Gedanken der Erfindung kann vorgesehen sein, dass die Bremsen nur so weit gelöst werden, bis eine zusätzliche Niveauänderung in definierter Höhe eingetreten ist. Die zusätzliche Niveauänderung wird dabei vorzugsweise in Prozenten der bisherigen Niveauänderung berechnet.

Beispielsweise werden die Bremsen so weit gelöst, bis eine zusätzliche Niveauänderung von 50 % der bisherigen Niveauänderung eingetreten ist. Die Niveauänderung mit Verspannung wird als hundert Prozent angenommen. Nachdem die Bremsen etwas gelöst wurden, liegt eine Niveauänderung von 150 % insgesamt vor. Die Bremsen werden dann, oder wenn ein vom Bediener vorgegebenes Soll-Niveau erreicht ist, wieder angezogen.

Das erfindungsgemäße Fahrzeug weist die Merkmale des Anspruchs 5 auf. Das Fahrzeug ist mit elektronischem Bremssystem, einem Steuergerät hierfür, einer an Längslenkern oder Schräglenkern aufgehängten Achse oder Achsen einer Achsgruppe und mit einem Wegsensor zur Ermittlung von Niveauänderungen im Bereich der Achse oder der Achsgruppe ausgestattet. Das Steuergerät wertet Signale und Daten aus, um zu bestimmen, ob bei Niveauänderung eine Verspannung im Fahrzeug vorliegt. Bei Verspannung löst das Steuergerät zumindest Bremsen der betreffenden Achse oder der Achsen eine Achsgruppe beidseitig so weit, dass noch eine verminderte Abbremsung gegeben ist. Die Besonderheit des Fahrzeugs liegt in der Auslegung des Steuergerätes für das elektronische Bremssystem. Dieses nimmt die Signale des Wegsensors auf und verknüpft diese durch geeignete Software in besonderer Weise mit den ohnehin im Steuergerät des elektronischen Bremssystems vorliegenden Daten, ermittelt auf dieser Basis, ob eine Verspannung im Fahrzeug vorliegt und löst gegebenenfalls die eingelegten Bremsen, jedoch nur so weit, dass noch eine verminderte Abbremsung gegeben ist. Dadurch kann sich die Verspannung im Fahrwerk abbauen, ohne dass das Fahrzeug rollt.

Vorteilhafterweise handelt es sich bei dem Fahrzeug um ein Anhängefahrzeug, insbesondere einen Auflieger. Die Verspannung ergibt sich dann bei Niveauänderung an der Achse des Aufliegers, nämlich zwischen der Achse des Aufliegers einerseits und gebremsten Rädern der Zugmaschine andererseits. Übertragen wird die Spannung vom Auflieger zur Zugmaschine über den Verbindungspunkt (Sattelplatte/Königszapfen).

Bei dem Fahrzeug kann es sich auch um einen Motorwagen ohne Anhänger handeln oder um einen anderen Typ eines Anhängers, etwa einen Anhänger mit Deichsel.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
Fig. 1 und Fig. 2 einen Lastzug mit Sattelzugmaschine und Auflieger, wobei der Auflieger einmal abgesenkt und einmal angehoben ist,
Fig. 3 den Lastzug gemäß den Fig. 1 und 2 in schematischer Draufsicht.

Ein Lastzug 10 besteht hier aus einer Zugmaschine 11 mit Sattelplatte 12 und einem Auflieger 13 mit Königszapfen 14.

Die Zugmaschine 11 weist jeweils eine Vorderachse 15 und eine Hinterachse 16 auf. Der Auflieger 13 ist hier mit einer Achse 17 versehen, welche an einer Achsschwinge 18 gelagert ist. Die Achsschwinge 18 ist um einen Lagerpunkt 19 schwenkbar und bildet dabei für die Achse 17 einen nachlaufenden Längslenker.

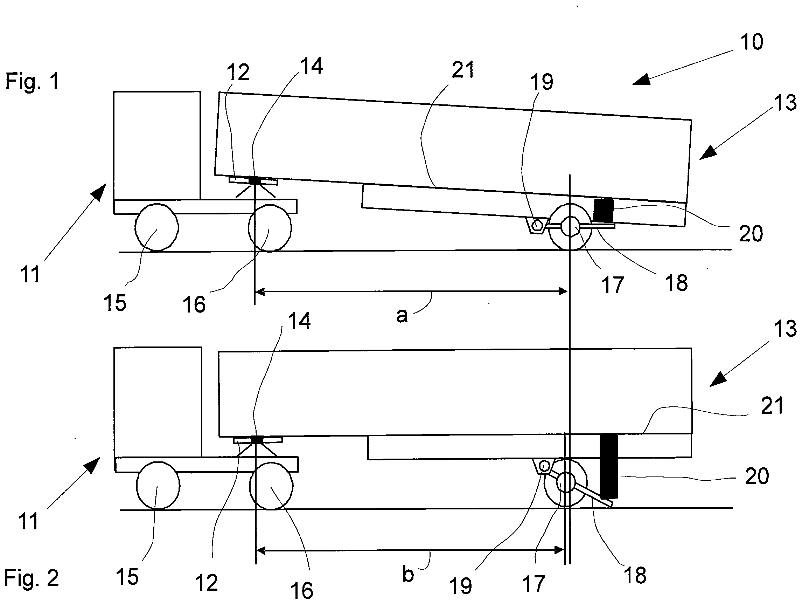

Die Achse 17 ist durch einen Luftfederbalg 20, welcher dem Lagerpunkt 19 gegenüberliegend auf die Achsschwinge 18 wirkt, in der Höhe verstellbar. In Fig. 1 ist der Luftfederbalg 20 minimal befüllt, während Fig. 2 einen maximal befüllten Luftfederbalg 20 zeigt. Entsprechend ist das Niveau des Aufliegers 13 in Fig. 1 deutlich niedriger als in Fig. 2. Als Niveau wird hier der Abstand der Achse 17 zum Fahrzeugaufbau 21 des Aufliegers 13 bezeichnet.

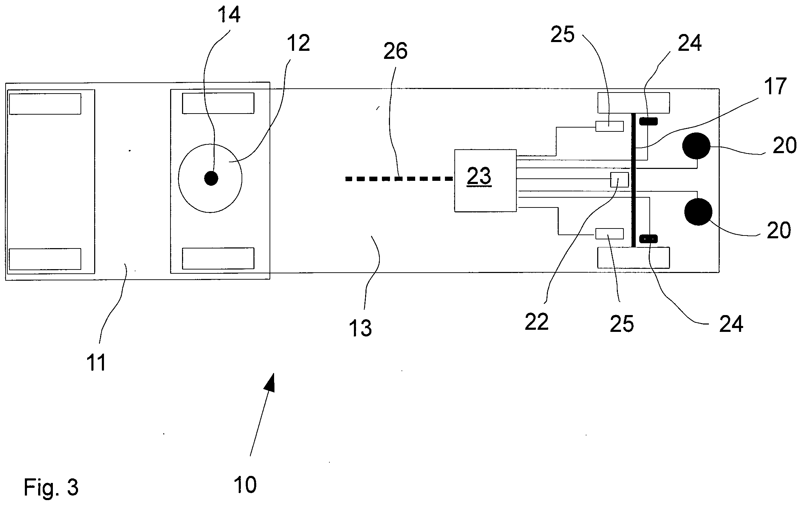

Der Lastzug ist mit einem elektronischen Bremssystem in Verbindung mit einer pneumatischen Bremsanlage und einer elektronisch geregelten pneumatischen Federung ausgestattet. Diese ermöglicht einen automatischen Niveauausgleich beim Beladen sowie eine gezielte Niveauanpassung an eine Laderampe. Bestandteil der elektronisch geregelten pneumatischen Federung ist auch ein Wegsensor 22, mit dem ein Ist-Niveau der Achse 17 und Änderungen des Niveaus detektierbar sind. Bestandteil des elektronischen Bremssystems ist ein Steuergerät 23 mit integriertem Achsmodulator, an welches unter anderem Raddrehzahlsensoren 24 angeschlossen sind, und mit dem unter anderem Bremsventile 25 oder Bremszylinder der Achse 17 ansteuerbar sind, siehe Fig. 3. Das Steuergerät 23 ist außerdem über eine genormte Datenverbindung (CAN-Bussystem 26) an ein nicht näher gezeigtes elektronisches System der Zugmaschine 11 angeschlossen. Funktion, Bestandteile und Zusammenwirken der genannten Systeme sind grundsätzlich bekannt. In den Figuren gezeigt sind nur die für das Verständnis der Erfindung bedeutsamen Bestandteile.

Im vorliegenden Fall ist der Auflieger 13 mit einer Zusatzfunktion ausgestattet, die im Wesentlichen in der Funktion und der Software des Steuergerätes 23 liegt. Dieses erkennt bei Bedarf eine Verspannung des Aufliegers 13. Die Verspannung tritt beispielsweise zwischen den in den Fig. 1 und Fig. 2 dargestellten Zuständen auf. In Fig. 1 ist das Niveau des Aufliegers 13 zum Fahren abgesenkt. Der Radstand, bzw. hier der Abstand zwischen der Achse 17 und dem Königszapfen 14, ist durch einen Doppelpfeil a dargestellt. In Fig. 2 ist das Niveau des Aufliegers 13 angehoben. Entsprechend ist die Achsschwinge 18 abwärts geschwenkt. Dadurch ist ein neuer, kürzerer Abstand gemäß Doppelpfeil b zwischen Achse 17 und Königszapfen 14 gegeben. Bei gebremsten Rädern der Achsen 16 und 17 ergibt sich eine starke Verspannung im Auflieger 13, die so ausgeprägt sein kann, dass, ausgehend von Fig. 1, der Zustand gemäß Fig. 2 nicht erreichbar ist. Erforderlich ist zwischenzeitlich wenigstens ein leichtes Lösen der Bremsen.

Das Steuergerät 23 wertet laufend die Signale des Wegsensors aus, ebenso die Signale der Raddrehzahlsensoren 24. Das Steuergerät 23 erhält außerdem Informationen über den Status einer Feststellbremse bzw. die Höhe eines Bremssteuerdrucks. Das Steuergerät 23 speichert in regelmäßigen Abständen oder unter bestimmten Bedingungen das aktuelle Niveau (Ist-Niveau) der Achse 17 ab, nämlich solange oder sobald die Räder der Achse 17 nicht gebremst sind.

Dieses gespeicherte Ist-Niveau wird als Neutralposition oder neutrale Chassishöhe bezeichnet. Ausgehend von der Neutralposition wird beurteilt, ob eine Verspannung vorliegt. Die Erkennung auf Verspannung erfolgt, wenn die nachfolgenden Bedingungen erfüllt sind:
a) Die Fahrzeuggeschwindigkeit ist gleich Null km/h (Stillstand),
b) die Feststellbremse ist eingelegt bzw. der Bremssteuerdruck ist größer als ein Grenzwert, insbesondere größer als 4,5 bar,
c) eine Niveauänderung wird erkannt oder eine Niveauregelung durch Beladungsänderung ist aktiv; dabei ist das aktuelle Niveau mindestens 20 mm von der Neutralposition entfernt;
d) die Geschwindigkeit der Niveauänderung liegt unter einem bestimmten Grenzwert, beispielsweise unter 4 mm pro Sekunde.

Zum Lösen der erkannten Verspannung bewirkt das Steuergerät 23 ein Lösen der Bremsen durch entsprechende Ansteuerung der zugehörigen Bremsventile. Dies kann beispielsweise realisiert sein durch eine im Steuergerät 23 implementierte Funktion "Bremse lösen". Der Bremsdruck wird durch das Steuergerät 23 auf einen Wert reduziert, der einer Abbremsung von 18 % mindestens entspricht, vorzugsweise von etwa 22 %. Dadurch ist sichergestellt, dass die Bremsfunktion den gesetzlichen Anforderungen entspricht. Gleichzeitig kann sich die Verspannung lösen und die Räder können sich ein Stück weit drehen.

Alternativ kann der Bremsdruck so weit gelöst oder angepasst werden, bis sich eine zusätzliche Niveauänderung ergibt, bei der die Verspannung ausreichend reduziert ist. Auch dabei ist sichergestellt, dass die gesetzlich geforderte Abbremsung von mindestens 18 % eingehalten wird.

Das Lösen der Bremsen ist nur kurzzeitig vorgesehen. Nach Abbau der Verspannung wird der Bremsdruck wieder auf den ursprünglich anliegenden Wert erhöht. Die Zeitspanne, während der die Reduktion der Abbremsung besteht, umfasst etwa 0,2 bis 2 Sekunden. Je nach Fahrzeuggeometrie und Eigenschaften der beteiligten Systeme kann die Zeitspanne auch länger sein.

## Patentansprüche

1. Verfahren zur Ansteuerung von Bremsen durch ein elektronisches Bremssystem in einem gebremsten, stehenden Fahrzeug (11,13) bei Niveauänderung, wobei bei Erkennen einer Verspannung im Fahrzeug das elektronische Bremssystem beidseitig Bremsen des Fahrzeugs löst, aber nur so weit, dass noch eine verminderte Abbremsung gegeben ist, wobei das elektronische Bremssystem auf Verspannung des Fahrzeugs erkennt, wenn zumindest folgende Bedingungen erfüllt sind:
a) das Fahrzeug steht still, und
b) das Fahrzeug ist gebremst, und
c) ein Grenzwert einer Niveauänderung ist über- oder unterschritten,
wobei das elektronische Bremssystem auf Verspannung des Fahrzeugs erkennt, wenn die Geschwindigkeit der Niveauänderung unter einen definierten Grenzwert gesunken ist, insbesondere unter 4 mm/s.

2. Verfahren nach Anspruch 1, **dadurch gekennzeichnet, dass** das Fahrzeug als gebremst gilt, wenn die Feststellbremse eingelegt ist oder ein Bremsensteuerdruck größer ist als ein Grenzwert, insbesondere größer als 4,5 bar.

3. Verfahren nach Anspruch 1, **dadurch gekennzeichnet, dass** die Niveauänderung als Differenz aus einem aktuell detektierten Niveau und einer Neutralposition berechnet wird, wobei die Neutralposition bei gelöster Betriebsbremse oder Feststellbremse detektiert und gespeichert wird.

4. Verfahren nach Anspruch 1, **dadurch gekennzeichnet, dass** die Bremsen nur so weit gelöst werden, bis eine zusätzliche Niveauänderung in definierter Höhe eingetreten ist.

5. Fahrzeug (11,13) mit elektronischem Bremssystem, einem Steuergerät (23) hierfür, einer an Längslenkern oder Schräglenkern aufgehängten Achse (17) oder Achsen einer Achsgruppe und mit einem Wegsensor (22) zur Ermittlung von Niveauänderungen im Bereich der Achse (17) oder der Achsgruppe, wobei das Steuergerät (23) Signale und Daten auswertet um zu bestimmen, ob bei Niveauänderung eine Verspannung im Fahrzeug vorliegt, und dass das Steuergerät (23) bei Verspannung Bremsen der betreffenden Achse (17) oder der Achsen einer Achsgruppe beidseitig so weit löst, dass noch eine verminderte Abbremsung gegeben ist, wobei das Steuergerät (23) auf Verspannung des Fahrzeugs erkennt, wenn zumindest folgende Bedingungen erfüllt sind:
a) das Fahrzeug steht still, und
b) das Fahrzeug ist gebremst, und
c) ein Grenzwert einer Niveauänderung ist überschritten, **dadurch gekennzeichnet, dass** eine Erkennung auf Verspannung erfolgt, wenn die Geschwindigkeit der Niveauänderung unter einen definierten Grenzwert gesunken ist, insbesondere unter 4 mm/s.

## Claims

1. Method for actuating brakes by means of an electronic brake system in a braked, stationary vehicle (11, 13) where there is a change of ride level, wherein when stress is detected in the vehicle the electronic brake system releases brakes of the vehicle on both sides, but only to such an extent that reduced braking still occurs, wherein the electronic brake system detects stress of the vehicle if at least the following conditions are met:
a) the vehicle is stationary, and
b) the vehicle is braked, and
c) a limiting value of a change in ride level is exceeded or undershot,
wherein the electronic brake system detects stress of the vehicle if the speed of the change in ride level has dropped below a defined limiting value, in particular below 4 mm/s.

2. Method according to Claim 1, **characterized in that** the vehicle is considered to be braked if the parking brake is engaged or a brake control pressure is higher than a limiting value, in particular higher than 4.5 bar.

3. Method according to Claim 1, **characterized in that** the change in ride level is calculated as a difference between a currently detected ride level and a neutral position, wherein the neutral position is detected and stored when the service brake or parking brake is released.

4. Method according to Claim 1, **characterized in that** the brakes are- released only until an additional change in ride level has occurred at a defined height.

5. Vehicle having an electronic brake system, a control unit (23) for said system, an axle (17) or axles of an axle group suspended from longitudinal control arms or semi-trailing arms, and with a travel sensor (22) for determining changes in ride level in the region of the axle (17) or the axle group, wherein the control unit (23) evaluates signals and data in order to determine whether stress occurs in the vehicle when there is a change in ride level, and in that when stress occurs the control unit (23) releases brakes of the respective axle (17) or the axles of an axle group on both sides to such an extent that reduced braking still occurs, wherein the control unit (23) detects stress of the vehicle if at least the following conditions are met:
a) the vehicle is stationary, and
b) the vehicle is braked, and
c) a limiting value of a change in ride level is exceeded,
**characterized in that**
stress is detected if the speed of the change in ride level has dropped below a defined limiting value, in particular below 4 mm/s.

## Revendications

1. Procédé de commande de freins au moyen d'un système de freinage électronique dans un véhicule immobile (11, 13) lors d'une variation de niveau, dans lequel, lors de la détection d'une contrainte dans le véhicule, le système de freinage électronique déclenche des deux côtés les freins du véhicule mais seulement jusqu'à ce qu'une certaine réduction de l'accélération soit obtenue, dans lequel le système de freinage électronique détecte, lorsqu'une contrainte s'exerce dans le véhicule, si au moins les conditions suivantes sont satisfaites :
a) le véhicule est immobile, et
b) le véhicule est freiné, et
c) une valeur limite d'une variation de niveau est dépassée en sens croissant ou décroissant,
dans lequel le système de freinage électronique détecte, lors d'une contrainte s'exerçant dans le véhicule, si la vitesse de la variation de niveau s'est abaissée en dessous d'une valeur limite définie, notamment en dessous de 4 mm/s.

2. Procédé selon la revendication 1, **caractérisé en ce que** le véhicule est considéré comme étant freiné lorsque les freins de stationnement sont actionnés ou lorsqu'une pression de commande de freinage est supérieure à une valeur limite, notamment supérieure à 4,5 bars.

3. Procédé selon la revendication 1, **caractérisé en ce que** la variation de niveau est calculée comme étant la différence entre un niveau actuel détecté et une position neutre, dans lequel la position neutre est détectée et stockée lorsque les freins de service ou les freins de stationnement sont déclenchés.

4. Procédé selon la revendication 1, **caractérisé en ce que** les freins ne sont déclenchés que jusqu'à ce qu'une variation de niveau supplémentaire se soit produite à une hauteur définie.

5. Véhicule (11, 13) comportant un système de freinage électronique, un appareil de commande (23) destiné à celui-ci, un essieu (17) ou des essieux suspendus à des bras oscillants longitudinaux ou à des bras oscillants obliques d'un groupe d'essieux et comportant un capteur de course (22) destiné à déterminer des variations de niveau dans la région de l'essieu (17) ou du groupe d'essieux, dans lequel l'appareil de commande (22) évalue des signaux et des données afin de déterminer si une contrainte s'exerce dans le véhicule lors d'une variation de niveau, et que l'appareil de commande (23), lorsqu'une contrainte s'exerce, déclenche des deux côtés des freins de l'essieu (17) concerné ou des essieux d'un groupe d'essieux d'une façon suffisante jusqu'à ce qu'une certaine réduction de la décélération soit obtenue, dans lequel l'appareil de commande (23) détecte, lorsqu'une contrainte s'exerce dans le véhicule, si au moins les conditions suivantes sont satisfaites :
a) le véhicule est immobile, et
b) le véhicule est freiné, et
c) une valeur limite d'une variation de niveau est dépassée,
**caractérisé en ce qu'**une détection d'une contrainte se produit lorsque la vitesse de la variation de niveau s'est abaissée en dessous d'une valeur limite définie, notamment en dessous de 4 mm/s.
